# EUROPEAN PATENT APPLICATION

(11) **EP 1 843 058 A1**
(43) Date of publication of application: **10.10.2007**
(21) Application number: 06112385.7
(22) Date of filing: 07.04.2006
(51) Int. Cl.: F16F 1/04, B60G 17/02

(54) **Adjusting mechanism with a helical spring**

(71) Applicant: Neotek Co., Ltd., Daan District, Taipei 106 (TW)
(72) Inventor: FANG, Hsiu Chun, 702, Tainan (TW)
(74) Representative: Beck, Michael Rudolf

(57) **Abstract**

In this invention, an adjusting mechanism with a spring (14), particularly an adjusting mechanism with a helical spring of large diameter, is disclosed, the thread grooves of inner bore of a rotation member (16) being mainly used for the helical spring of large diameter fixed to the spring-fixed base to glide. When the rotation member rotates and axially shifts, the valid number of compressed coils of the helical spring of large diameter changes, thereby a spring coefficient of the helical spring of large diameter being changed.

## Description

### FIELD OF THE INVENTION

This invention relates to an adjusting mechanism with a spring and particularly to an adjusting mechanism with a helical spring of large diameter, of which the structure is simple so that a spring coefficient of the helical spring of large diameter may be adjusted based on a request.

### BACKGROUND OF THE INVENTION

The spring coefficient of a conventional helical spring is made according to a predetermined specification before the spring is produced, so it is usually not available to various mechanisms. Thus, a special spring that is being developed for a request is provided, but the cost of development and manufacturing is higher, which does not meet economic benefits.

To improve what is mentioned above, an invention of Taiwan Patent No. 436588, titled "Adjustable Casing for Helical Spring", was disclosed. The device is made up with male and female cases and a rotation member, characterized in that two ends of a helical spring are respectively mounted to a fixed base in the center of the bottom of female case and to the inside of male case. A plurality of resists of outer or inner bore of the rotation member contact the coil of spring, and thus the rotation member is rotated to change the valid number of compressed coils of the helical spring that receives a compressive force or tension, thereby the spring coefficient of helical spring being adjusted. However, the case device with an adjustable helical spring mentioned above, especially the helical spring of large diameter, is actually used, imperfection that is not solved occurs.

In consideration of the mentioned-above defects of prior art, this inventor especially concentrates on studies and operates in coordination with academic theories, finally providing this invention for a design reasonable and effective improvement of the defects of the conventional structure mentioned above.

### SUMMARY OF THE INVENTION

It is an object of this invention to mainly provide an adjusting mechanism with a helical spring of large diameter. When a rotation member is rotated, thread grooves of inner bore of the rotation member go round and round along the coil of helical spring of large diameter and axially shift so that the valid number of compressed coils of the helical spring of large diameter changes, thereby a spring coefficient of the helical spring of large diameter being changed.

It is another object of this invention to provide an adjusting mechanism with a helical spring of large diameter that is especially used in a shock absorber device, in which the valid number of compressed coils of the helical spring of large diameter is adjusted, thereby the spring coefficient and stroke being adjusted for adaptation to various operation environment.

It is further an object of this invention to provide an adjusting mechanism with a helical spring of large diameter. When the flexibility of helical spring of large diameter is exhausted, the device is used to adjust the valid number of compressed coils and thus the spring coefficient recovers, thereby the service life of spring being prolonged.

In order to further know the features and technical means of this invention, refer to the detailed description according to this invention accompanied with drawings; however, the accompanied drawings are provided for reference and illustration only and are not limited to this invention.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is an exploded view of an adjusting mechanism with a helical spring of large diameter according to this invention; and
Fig. 2 is a 3D view of the adjusting mechanism with the helical spring of large diameter according to this invention.

### DETAILED DESCRIPTION OF THE PREFERRED EMBODIMENTS

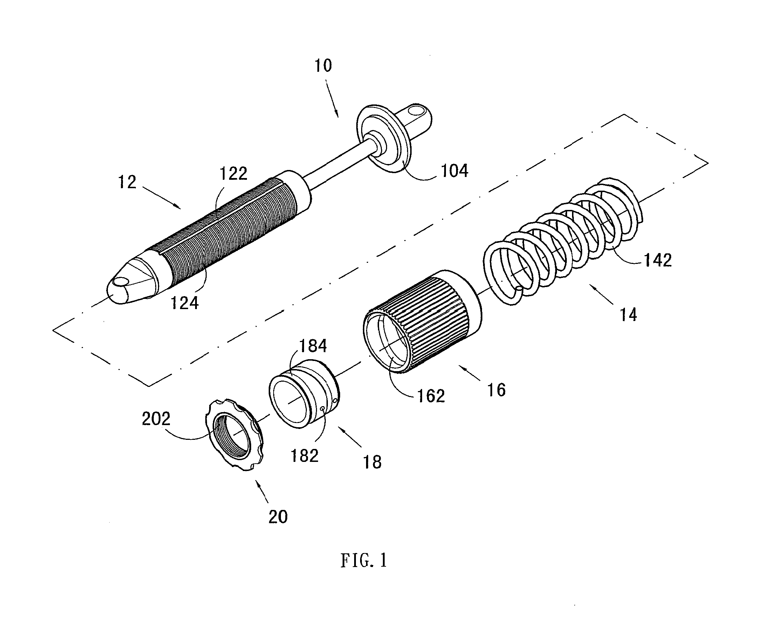

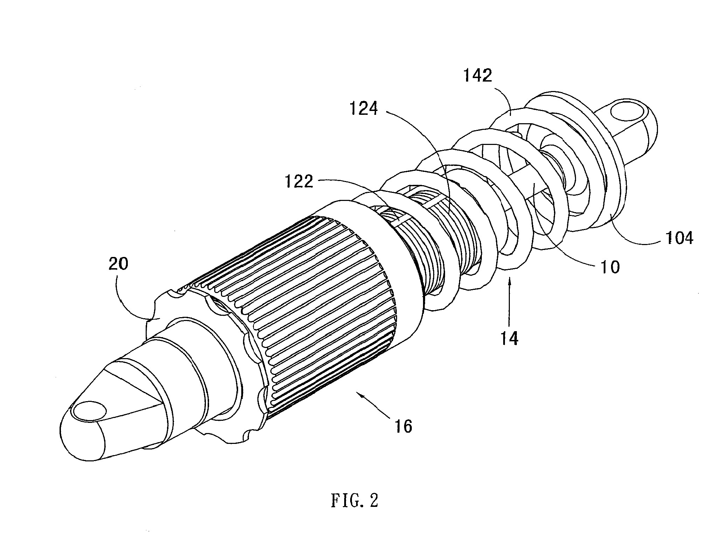

As shown in Figs. 1 and 2 respectively for an exploded view of an adjusting mechanism with a helical spring of large diameter according to this invention and for a 3D view of the adjusting mechanism with the helical spring of large diameter according to this invention, the mechanism comprises a flexible inner tube 10, a flexible outer tube 12, a spring-fixed base 18, a helical spring 14 of large diameter, a rotation member 16, and a pre-compressive adjustment knob 20. The outer bore of one end of the flexible inner tube 10 works with the inner bore of flexible outer tube 12 to axially glide, in which a compressive stroke of the helical spring 14 of large diameter depends on the length, and the outer bore of the other end of the flexible inner tube 10 is provided with a spring support seat 104 that props up each other a close-mouthed surface of the helical spring 14 of large diameter, thereby the helical spring 14 of large diameter being kept pre-compressive. The inner bore of the flexible outer tube 12 works with the outer bore of flexible inner tube 10 to glide, in which the outer bore is formed with an axial groove 122 and a thread 124 and the axial groove 122 match with a screw 182 on the spring-fixed base 18 so as to make the spring-fixed base 18 axially shift only. The thread 124 of outer bore of the flexible outer tube 12 match with the thread 202 of inner bore of the pre-compressive adjustment knob 20 to adjust the predetermined compression of the helical spring 14 of large diameter.

One end of the helical spring 14 of large diameter is close mouthed and surfaced to prop up the spring support seat 104 of flexible inner tube 10 so that the helical spring 14 of large diameter is kept pre-compressive, while the other end is open that is completely mounted to a spiral spring groove 184 of the spring-fixed base 18.

The spring-fixed base 18 is hollow to secure the helical spring 14 of large diameter and axially shift only, and its inner bore covers the flexible outer tube 12. The plurality of screws 182 are riveted and pierce through a tube wall of the spring-fixed base 18 and aligns with the axial groove 122 of flexible outer tube 12 to make the spring-fixed base 18 axially shift only. The spiral spring groove 184 at the outer bore of the spring-fixed base 18 is a spiral groove of which a thread pitch is corresponding to that of the helical spring 14 of large diameter and of which the depth is smaller than the radius of coil 142. A mouthed end of the helical spring 14 of large diameter revolves around the spiral spring groove 184 and axially shifts to make the coil 142 to be fixed into the whole spiral spring groove 184. The range of variation of the spring coefficient depends on the length of spiral thread of the spiral spring groove 184, and the longer the spiral spring groove 184 becomes, the wider the range of variation of the spring coefficient of the helical spring 14 of large diameter gets. The rotation member 16 is hollow to adjust the valid number of compressed coils of the helical spring 14 of large diameter, namely the spring coefficient of the helical spring 14 of large diameter; the thread grooves 162 of inner bore of rotation member 16 are spiral grooves of which a thread pitch is corresponding to that of the helical spring 14 of large diameter and of which the depth is smaller than the radius of coil 142, and works with the helical spring 14 of large diameter fixed onto the spring support seat 104. When the rotation member 16 rotates and axially shifts, its thread grooves 162 glide along the coil 142 of helical spring 14 of large diameter. The thread grooves 162 of inner bore of the rotation member 16 act each other to the helical spring 14 of large diameter that is fixed to the spring support seat 104, so the valid number of compressed coils of the helical spring 14 of large diameter is changed. The pre-compressive adjustment knob 20 is hollow to adjust the predetermined compression of the helical spring 14 of large diameter, and the threads 202 of inner bore match with the thread of outer bore of the flexible outer tube. When the pre-compressive adjustment knob 20 rotates and axially shifts, the spring-fixedbase 18 is pushed, the rotation member 16 axially shifts, and the predetermined compression of the helical spring 14 of large diameter is changed.

As shown in Fig. 2 for a 3D view of the adjusting mechanism with the helical spring 14 of large diameter according to this invention, when the rotation member 16 rotates and axially shifts, its thread grooves 162 glide along the coil 142 of helical spring 14 of large diameter. The thread grooves 162 of inner bore of the rotation member 16 act each other to the helical spring 14 of large diameter that is fixed to the spring support seat 104, so the valid number of compressed coils of the helical spring 14 of large diameter is changed for variation of the spring coefficient of the helical spring 14 of large diameter. When the pre-compressive adjustment knob 20 rotates and axially shifts, the spring-fixed base 18 is pushed, the rotation member 16 axially shifts, and the predetermined compression of the helical spring 14 of large diameter is changed.

The present invention has been described with a preferred embodiment thereof and it is understood that many changes and modifications in the described embodiment can be carried out without departing from the scope and the spirit of the invention that is intended to be limited only by the appended claims.

## Claims

1. An adjusting mechanism with a helical spring of large diameter, comprising:
a helical spring of large diameter of which one end is mouthed and the other end is close mouthed;
a flexible inner tube, an outer bore of one end of the flexible inner tube works with an inner bore of flexible outer tube to axially glide and the other end of the flexible inner tube is provided with a spring support seat that props up each other a close-mouthed surface of the helical spring of large diameter;
a flexible outer tube, in which the inner bore works with the outer bore of flexible inner tube to glide, the outer bore is formed with an axial groove and a thread, in which the axial groove match with a screw that is fixed to and pierces through a tube wall of the spring-fixed base and the thread match with the thread of inner bore of the pre-compressive adjustment knob;
a pre-compressive adjustment knob that is hollow, of which the thread of inner bore match with the thread of outer bore of the flexible outer tube; a spring-fixed base that is hollow, of which the inner bore covers the outer bore of the flexible outer tube and the outer bore is formed with a spiral spring groove and a plurality of screws riveted and pierce through a tube wall of the spring-fixed base, in which the helical spring of large diameter of the mouthed end is fixed to the whole spiral spring groove;
a rotation member is hollow, of which the inner bore is formed with a thread groove, and that works with the helical spring of large diameter fixed to the spring-fixed base.

2. The adjusting mechanism with the helical spring of large diameter according to claim 1, wherein when the pre-compressive adjustment knob rotates and axially shifts, the spring-fixed base is pushed, the rotation member axially shifts, and the predetermined compression of the helical spring of large diameter is changed.

3. The adjusting mechanism with the helical spring of large diameter according to claim 1, wherein the plurality of screws are riveted and pierce through the tube wall of the spring-fixed base and aligns with the axial groove of flexible outer tube to make the spring-fixed base axially shift only.

4. The adjusting mechanism with the helical spring of large diameter according to claim 1, wherein when the rotation member rotates and axially shifts, its thread grooves glide along the coil of helical spring of large diameter, and the thread grooves of inner bore of the rotation member act each other to the helical spring of large diameter that is fixed to the spring-fixed base, so the valid number of compressed coils of the helical spring of large diameter is changed.

5. The adjusting mechanism with the helical spring of large diameter according to claim 1, wherein the thread grooves of inner bore of the rotation member are spiral grooves of which a thread pitch is corresponding to that of the helical spring of large diameter and of which the depth is smaller than the radius of coil.

6. The adjusting mechanism with the helical spring of large diameter according to claim 1, wherein the spiral spring groove at the outer bore of the spring-fixed base is a spiral groove of which a thread pitch is corresponding to that of the helical spring of large diameter and of which the depth is smaller than the radius of coil.

7. The adjusting mechanism with the helical spring of large diameter according to claim 1, wherein the range of adj ustment of the spring coefficient depends on the length of spiral thread of the spiral spring groove, and the longer the spiral spring groove becomes, the wider the range of variation of the spring coefficient of the helical spring of large diameter gets.
